# EUROPEAN PATENT APPLICATION

(11) **EP 4 800 047 A1**
(43) Date of publication of application: **02.09.2026**
(21) Application number: 25161166.1
(22) Date of filing: 28.02.2025
(51) Int. Cl.: C08G 18/20, C08G 18/42, C08G 18/66, C08G 18/76, C08J 9/14

(54) **HFO/HCFO-CONTAINING ISOCYANATE-REACTIVE COMPOSITIONS, RELATED POLYURETHANE FOAM-FORMING COMPOSITIONS, AND SPRAY-APPLIED POLYURETHANE FOAMS**

(71) Applicant: Covestro LLC, Pittsburgh, PA 15205-9741 (US)
(72) Inventor: Younes, Usama, Reunion, 34747 (US); Palmosina, Michael, Baden, 15005-2611 (US)
(74) Representative: Levpat

(57) **Abstract**

Isocyanate-reactive compositions include a hydrofluoroolefin blowing agent, related spray-applied polyurethane foams formed therefrom that can provide structural support to wall structures. When formulated utilizing a hydrochlorofluoroolefin ("HCFO") as the hydrofluoroolefin, foams produced using such isocyanate-reactive compositions after storing the isocyanate-reactive composition for 6 months can have a density that is within 10% of the density of a foam produced from the same isocyanate-reactive composition that is produced immediately after making the isocyanate-reactive composition.

## Description

### FIELD

This specification relates to isocyanate-reactive compositions that include a hydrofluoroolefin blowing agent, as well as to related spray-applied polyurethane foams formed therefrom that can provide structural support to wall structures. In addition, when formulated utilizing a hydrochlorofluoroolefin ("HCFO") as the hydrofluoroolefin, foams produced using such isocyanate-reactive compositions after storing the isocyanate-reactive composition for 6 months can have a density that is within 10% of the density of a foam produced from the same isocyanate-reactive composition that is produced immediately after making the isocyanate-reactive composition.

### BACKGROUND

Spray polyurethane foams (SPFs) are often formed by combining a polyol component and a polyisocyanate in the presence of water and a physical blowing agent. Aromatic polyester polyols and sucrose-based polyether polyols are often used in the polyol component. Such polyols are often selected for SPF applications, such as wall or roof insulation applications, because of fire resistance properties they tend to impart to the foam.

Historically, the physical blowing agents used in SPFs have been chlorofluorocarbons (CFCs) and hydrochlorofluorocarbons (HCFCs). CFCs and HCFCs are, however, now disfavored because of their ozone depletion potential and relatively high global warming potential. As a result, alternative physical blowing agents are under consideration.

HCFOs are one class of alternative physical blowing agents with low or no ozone depletion potential and low global warming potential. A drawback to at least some HCFOs as blowing agents in the production of satisfactory isocyanate-based foams is, however, poor shelf-life. Blowing agents often are combined with polyols and other components, such as surfactant(s) and the catalyst(s), to form a so-called "B-side" pre-mix that may be stored for up to several months prior to being combined with an "A-side" isocyanate component to form the SPF.

With certain HCFOs, however, if the B-side composition is aged prior to combining with the polyisocyanate, the foam can be of lower quality and may even collapse during the formation of foam. The poor foam structure is thought to be attributable to the reaction of certain catalysts, particularly amine catalysts, with these HCFOs which results in the partial decomposition of the blowing agent and, as a result, undesirable modification of silicone surfactants, resulting in poor foam structure and quality.

Relatively recently, insulated wall structures satisfying strict industry insulation requirements have been developed that can be made without excessive material and labor costs. According to one proposal, a foam wall structure includes a foam panel, such as a faced polyisocyanurate panel, attached to at least a portion of a front frame surface, such that the faced polyisocyanurate panel and frame members define one or more voids within the frame; and a foam layer received within at least a portion of one of the voids within the frame, wherein the foam layer adheres to at least a portion of the faced polyisocyanurate panel. In such wall structures, a thicker "structural" SPF having a relatively high density (around 2.8 lb/ft³) is deposited within the frame voids to enhance the racking shear strength performance of the wall structure.

An important factor for commercial acceptance of a foam for the construction industry is the ASTM E84 classification of the foam. In some applications, a NFPA 101 Life Cycle Safety Code Class A designation may be required. To achieve this, the foam must exhibit a flame spread index (FSI) of 25 or less and a smoke-developed index (SDI) of 450 or less according to ASTM E84-21 at the applied foam thickness.

As a result, it would be highly desirable to provide polyurethane foam-forming compositions that employ a HCFO blowing agent and that are capable of producing a relatively high density structural foam layer that may exhibit an ASTM-E84 Class A rating at any foam thickness. In would also be desirable if the quality of the produced foam is consistent even if the "B-side" premix is stored for several months prior production of the foam, as assessed by consistency in foam density.

### SUMMARY

In certain respects, this specification relates to isocyanate-reactive compositions. The isocyanate-reactive compositions comprise an aromatic polyester polyol, a tertiary amine catalyst composition, and a blowing agent composition. The aromatic polyester polyol has a functionality of 2.6 to 3.5 and an OH number of 300 to 400 mg KOH/g and is present in an amount of at least 70% by weight, based on the total weight of the isocyanate-reactive composition. The tertiary amine catalyst composition comprises at least 70% by weight, based on the total weight of tertiary amine, of an imidazole. The blowing agent composition comprises water and a hydrofluoroolefin, in which the hydrofluoroolefin is present in an amount of 1 to 6% by weight, based on the total weight of the isocyanate-reactive composition, and the hydroflouroolefin and water are present in the isocyanate-reactive composition in a relative ratio, by weight, of 3:1 to 6:1.

In other respects, this specification relates to polyurethane foam-forming compositions. The polyurethane foam-forming compositions comprise a polyisocyanate, an aromatic polyester polyol, a tertiary amine catalyst composition, and a blowing agent composition. The polyisocyanate is present in an amount sufficient to provide an isocyanate index of 70 to 150. The aromatic polyester polyol has a functionality of 2.6 to 3.5 and an OH number of 300 to 400 mg KOH/g and is present in an amount of at least 70% by weight, based on the total weight of the isocyanate-reactive composition. The tertiary amine catalyst composition comprises at least 70% by weight, based on the total weight of tertiary amine, of an imidazole. The blowing agent composition comprises water and a hydrofluoroolefin, in which the hydrofluoroolefin is present in an amount of 1 to 6% by weight, based on the total weight of the isocyanate-reactive composition, and the hydroflouroolefin and water are present in the isocyanate-reactive composition in a relative ratio, by weight, of 3:1 to 6:1

The specification also relates to, among other things, methods for making polyurethane foams using such polyurethane foam-forming compositions, polyurethane foams produced from such polyurethane foam-forming compositions, substrates having such a polyurethane foam applied thereto, as well as wall structures comprising such substrates.

### DETAILED DESCRIPTION

Various embodiments are described in this specification to provide an overall understanding of the structure, function, operation, manufacture, and use of the disclosed products and processes. It is understood that the various embodiments described and illustrated in this specification are non-limiting and non-exhaustive. Thus, the invention is not limited by the description of the various non-limiting and non-exhaustive embodiments disclosed in this specification. Rather, the invention is defined solely by the claims. The features and characteristics illustrated and/or described in connection with various embodiments may be combined with the features and characteristics of other embodiments. Such modifications and variations are intended to be included within the scope of this specification. As such, the claims may be amended to recite any features or characteristics expressly or inherently described in, or otherwise expressly or inherently supported by, this specification. Further, Applicant reserves the right to amend the claims to affirmatively disclaim features or characteristics that may be present in the prior art. Therefore, any such amendments comply with the requirements of 35 U.S.C. § 112, first paragraph, and 35 U.S.C. § 132(a). The various embodiments disclosed and described in this specification can comprise, consist of, or consist essentially of the features and characteristics as variously described herein.

Any patent, publication, or other disclosure material identified herein is incorporated by reference into this specification in its entirety unless otherwise indicated, but only to the extent that the incorporated material does not conflict with existing definitions, statements, or other disclosure material expressly set forth in this specification. As such, and to the extent necessary, the express disclosure as set forth in this specification supersedes any conflicting material incorporated by reference herein. Any material, or portion thereof, that is said to be incorporated by reference into this specification, but which conflicts with existing definitions, statements, or other disclosure material set forth herein, is only incorporated to the extent that no conflict arises between that incorporated material and the existing disclosure material. Applicant reserves the right to amend this specification to expressly recite any subject matter, or portion thereof, incorporated by reference herein.

Reference throughout this specification to "certain embodiments," or the like, means that a particular feature or characteristic may be included in an embodiment. Thus, use of the phrase "in certain embodiments," or the like, in this specification does not necessarily refer to a common embodiment, and may refer to different embodiments. Further, the particular features or characteristics may be combined in any suitable manner in one or more embodiments. Thus, the particular features or characteristics illustrated or described in connection with various embodiments may be combined, in whole or in part, with the features or characteristics of one or more other embodiments without limitation. Such modifications and variations are intended to be included within the scope of the present specification. In this manner, the various embodiments described in this specification are non-limiting and non-exhaustive.

In this specification, other than where otherwise indicated, all numerical parameters are to be understood as being prefaced and modified in all instances by the term "about", in which the numerical parameters possess the inherent variability characteristic of the underlying measurement techniques used to determine the numerical value of the parameter. At the very least, and not as an attempt to limit the application of the doctrine of equivalents to the scope of the claims, each numerical parameter described in the present description should at least be construed in light of the number of reported significant digits and by applying ordinary rounding techniques.

Also, any numerical range recited in this specification is intended to include all sub-ranges subsumed within the recited range. For example, a range of "1 to 10" is intended to include all sub-ranges between (and including) the recited minimum value of 1 and the recited maximum value of 10, that is, having a minimum value equal to or greater than 1 and a maximum value equal to or less than 10. Any maximum numerical limitation recited in this specification is intended to include all lower numerical limitations subsumed therein and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such sub-ranges would comply with the requirements of 35 U.S.C. § 112, first paragraph, and 35 U.S.C. § 132(a).

The grammatical articles "one", "a", "an", and "the", as used in this specification, are intended to include "at least one" or "one or more", unless otherwise indicated. Thus, the articles are used in this specification to refer to one or more than one (*i.e.,* to "at least one") of the grammatical objects of the article. By way of example, and without limitation, "a flame retardant" means one or more flame retardants, and thus, possibly, more than one flame retardant is contemplated and may be employed or used in an implementation of the described embodiments. Further, the use of a singular noun includes the plural, and the use of a plural noun includes the singular, unless the context of the usage requires otherwise.

As used herein, the term "functionality" refers to the average number of reactive hydroxyl groups, -OH, present per molecule of the -OH functional material that is being described. The term "hydroxyl number", as used herein, refers to the number of reactive hydroxyl groups available for reaction, and is expressed as the number of milligrams of potassium hydroxide equivalent to the hydroxyl content of one gram of the polyol, measured according to ASTM D4274-16. The term "equivalent weight" refers to the weight of a compound divided by its valence. For a polyol, the equivalent weight is the weight of the polyol that will combine with an isocyanate group, and may be calculated by dividing the molecular weight of the polyol by its functionality. The equivalent weight of a polyol may also be calculated by dividing 56,100 by the hydroxyl number of the polyol - Equivalent Weight (g/eq) = (56.1 x 1000)/OH number.

Equivalent weights and molecular weights given herein are number average equivalent weights and number average molecular weights respectively, as determined, unless indicated otherwise, by gel-permeation chromatography (GPC) using a method based on DIN 55672-1, employing chloroform as the eluent with a mixed bed column (Agilent PL Gel; SDVB; 3 micron Pore diameter: 1xMixed-E + 5 micron Pore diameter: 2xMixed-D), refractive index (RI) detection and calibrated with polyethylene glycol as the standard.

As indicated, certain embodiments of this specification relate to polyurethane foam-forming compositions that comprise a polyisocyanate. As used in this specification, the term "polyisocyanate" is meant to encompass diisocyanates as well as higher functionality isocyanates. Any of the known organic polyisocyanates may be used in the present invention. Suitable polyisocyanates include aromatic, aliphatic and cycloaliphatic polyisocyanates and combinations thereof. Representative of these types are diisocyanates, such as m-phenylene diisocyanate, p-phenylene diisocyanate, 2,4-toluene diisocyanate, 2,6-toluene diisocyanate, 1,6-hexamethylene diisocyanate, 1,4-hexamethylene diisocyanate, 1,4-cyclohexane diisocyanate, pentamethylene 1,5-diisocyanate, the isomers of hexahydrotoluene diisocyanate, 1,5-naphthylene diisocyanate, 1-methylphenyl-2,4-phenyl diisocyanate, 4,4'-diphenylmethane diisocyanate, 2,4'-diphenylmethane diisocyanate, 4,4'-biphenylene diisocyanate, 3,3'-dimethoxy-4,4'-biphenylene diisocyanate, and 3,3'-dimethyldiphenylpropane-4,4'-diisocyanate; triisocyanates, such as 2,4,6-toluene triisocyanate; and polyisocyanates, such as 4,4'-dimethyl-diphenylmethane-2,2',5,5'-tetraisocyanate and the polymethylene polyphenylisocyanates.

A crude polyisocyanate may be used, such as the crude toluene diisocyanate obtained by the phosgenation of a mixture of toluene diamines. Similarly, undistilled polyisocyanates, such as methylene bridged polyphenyl-polyisocyanates can be used and can be obtained by phosgenation of polyphenylpolymethylenepolyamines obtained by the condensation of aromatic amines, such as aniline, with formaldehyde.

Modified polyisocyanates may be obtained by reaction of polyisocyanates and can include, for example, isocyanates containing ester groups, urea groups, biuret groups, allophanate groups, carbodiimide groups, isocyanurate groups, uretdione groups and/or urethane groups.

In certain embodiments, the polyisocyanate comprises a methylene-bridged polyphenyl polyisocyanate and/or a prepolymer of a methylene-bridged polyphenyl polyisocyanate having an average functionality of 2.0 to 3.5, such as 2.1 to 3.1, isocyanate moieties per molecule, and a free NCO content of 15 to 35% by weight, such as 20 to 35% by weight, 25 to 35% by weight or, in some cases, 28 to 34% by weight. In certain embodiments, such methylene-bridged polyphenyl polyisocyanate and/or a prepolymer of a methylene-bridged polyphenyl polyisocyanate is present in an amount of at least 50% by weight, such as at least 80% by weight, at least 90% by weight, or at least 99% by weight, based on the total weight of polyisocyanate.

As also previously indicated, some embodiments of this specification relate to isocyanate-reactive compositions. As used herein, the term "isocyanate-reactive composition" refers to a composition that comprises, among other things, components that have functional groups that are reactive with isocyanate groups, *i.e.,* the isocyanate-reactive components defined below.

The isocyanate-reactive compositions of this specification include, among other things, an aromatic polyester polyol. The aromatic polyester polyol has a functionality of 2.6 to 3.5 and an OH number of 300 to 400 mg KOH/g. In some implementations, the foregoing aromatic polyester polyol has a functionality of 2.7 to 3.5, such as 2.7 to 3.2 or 2.8 to 3.2. In some implementations, the foregoing aromatic polyester polyol has an OH number of 300 to 380 mg KOH/g or 360 to 380 mg KOH/g.

The foregoing aromatic polyester polyol is present in an amount of at least 70% by weight, based on the total weight of the isocyanate-reactive composition. In some implementations, the foregoing aromatic polyester polyol is present in an amount of 70 to 90% by weight, 70 to 80% by weight, or 75 to 80% by weight, based on the total weight of the isocyanate-reactive composition.

As will be appreciated, suitable aromatic polyester polyols include, for example, typical transesterification or direct esterification reaction products of an acid or anhydride thereof with a polyol. More specifically, in some implementations, the foregoing aromatic polyester polyol comprises a transesterification or direct esterification reaction product of a reaction mixture comprising polyol, such as glycol and a higher functionality polyols, and a terephthalate source.

Specific examples of polyols suitable for use in preparing the foregoing aromatic polyester polyols include di- and higher functional polyols having a molecular mass of 62 g/mol to 400 g/mol. Specific examples of such polyols include, without limitation, 1,4-dihydroxycyclohexane, 1,2-propanediol, 1,3-propanediol, 2-methyl-1,3-propanediol, 1,5-pentanediol, 1,6-hexanediol, 1,8-octanediol, neopentyl glycol, ethylene glycol, diethylene glycol, triethylene glycol, tetraethylene glycol, dipropylene glycol, tripropylene glycol, dibutylene glycol, tripropylene glycol, glycerol, sorbitol, pentaerythritol, trimethylolpropane, natural vegetable oils, modified natural vegetable oils, fatty acid derivatives of vegetable oil, and including mixtures of any two or more thereof.

Specific examples of suitable sources of terephthalate include, without limitation, polyethylene terephthalate (PET), industrial recycled PET, post-consumer PET, terephthalic acid (TA), industrial recycled TA (BACA), phthalic anhydride, iso-phthalic acid or meta-phthalic acid.

In some specific examples, the reaction mixture may comprise 45 to 70% by weight of a glycol, 20 to 35% by weight a terephthalate source, and 5 to 20% by weight glycerin, based on the total weight of the reaction mixture used to produce the aromatic polyester polyol.

Specific examples of commercially available aromatic polyester polyols that are suitable for use in the isocyanate-reactive compositions of this specification include ISOEXTER TB-306 commercially available from Coim and TEROL 649 commercially available from Huntsman.

The isocyanate-reactive compositions can also comprise other isocyanate-reactive components, such as any of a variety of polyether polyols. In certain embodiments, however, the isocyanate-reactive composition is substantially or, in some cases, completely free of polyether polyols. In fact, it was observed that the isocyanate-reactive compositions of this specification can be suitable for producing relatively high density (2.8 lb/ft³ or more) polyurethane foams that are dimensionally-stable even without using relatively high-functionality (functionality of at least 5.0) sucrose-based polyols that are commonly employed to provide such dimensional stability to polyurethane spray foams. The absence of such sucrose-based polyols is advantageous for improving the smoke development properties of the polyurethane foams described in this specification.

As used herein, "substantially free", when used with reference to the absence of polyether polyol, such as sucrose-based polyol, in the isocyanate-reactive composition, means that polyether polyol is present, if at all, in an amount of less than 5% by weight, no more than 2% by weight, or, in some cases, no more than 1% by weight, based on the total weight of the isocyanate-reactive composition.

In certain embodiments, the isocyanate-reactive composition comprises a compound, often a monomeric compound, having at least two isocyanate-reactive hydrogen atoms and a molecular weight of from 32 to 399, which can act, for example, as a chain extender/crosslinker. These compounds often contain from 2 to 8, such 2 to 4, isocyanate-reactive hydrogen atoms. Specific examples of which include, but are not limited to, ethanolamine, diethanolamine, triethanolamine, sorbitol and/or glycerol.

In certain embodiments, the foregoing chain extender/crosslinker is present in an amount of 1 to 10% by weight, such as 1 to 5% by weight, or 2 to 3% by weight, based on the total weight of isocyanate-reactive components in the isocyanate-reactive composition. Moreover, in certain embodiments, chain extender/crosslinker is present in an amount of 0.5 to 5% by weight, such as 0.5 to 2% by weight, or 1 to 2% by weight, based on the total weight of the polyurethane foam-forming composition.

The isocyanate-reactive compositions of this specification also include a blowing agent composition. The blowing agent composition comprises water. In certain embodiments, water is present in an amount of 0.5 to 2% by weight, such as 0.8 to 1.5% by weight, or, in some cases, 1 to 1.5% by weight, based on the total weight of the isocyanate-reactive composition.

The blowing agent compositions of this specification also include a hydrofluoroolefin, such as a C₂ to C₆ hydrohalogenated olefin. As used herein, "C₂ to C₆ hydrohalogenated olefin" refers to a compound having 2 to 6 carbon atoms, at least one halogen atom, at least one hydrogen atom, and at least one carbon-carbon double bond. In certain embodiments, the C₂ to C₆ hydrohalogenated olefin has a boiling point of at least 10°C, such as 10°C to 40°C or 14°C to 40°C, at 1 atmosphere pressure.

In certain embodiments, the C₂ to C₆ hydrohalogenated olefin comprises fluorine and, in such cases, the C₂ to C₆ hydrohalogenated olefin is a hydrofluoroolefin or HFO. In certain of these embodiments, the halogen also comprises chlorine and, in such cases, the C₂ to C₆ halogenated olefin is a hydrofluorochloroolefin or HFCO.

Suitable HFOs include, without limitation, any of the isomers of 1,1,1,4,4,4-hexafluoro-2-butene (CF₃CHCHCF₃), such as the *cis-* and *trans*-forms of 1,1,1,4,4,4-hexafluoro-2-butene, as well as mixtures thereof. In some cases, for example, a blend of *cis*-1,1,1,4,4,4-hexafluoro-2-butene and *trans*-1,1,1,4,4,4*-*hexafluoro-2-butene may be used in which the cis-isomer is present in an amount of 1 to 99% by weight, 10 to 90% by weight, or 20 to 80% by weight and the *trans*-isomer is present in an amount of 99 to 1% by weight, 90 to 10% by weight, or 80 to 20% by weight, based on the total weight of 1,1,1,4,4,4-hexafluoro-2-butene that is present.

In some embodiments, the C₂ to C₆ hydrohalogenated olefin comprises a compound having the structure: 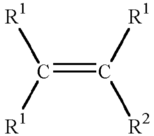 wherein each R¹, which may be the same or different, is chlorine, fluorine, bromine, iodine or hydrogen, with the proviso that at least one R¹ is hydrogen, R² is (CR¹₂)ₙX, X is CR¹F₂, and n is 0, 1, 2, or 3.

In certain embodiments, the C₂ to C₆ hydrohalogenated olefin comprises a C₃ to C₄ hydrohalogenated olefin, such as a compound of the above structure in which n is 0, at least one R¹ is H, at least one other R¹ is chlorine, and X is CF₃. Trifluoro, monochloropropenes are examples of such compounds. Suitable trifluoro, monochloropropenes include, for example, 1,1,1,trifluoro-2,chloro-propene (HFCO-1233xf) and both cis- and trans-1,1,1-trifluoro-3-chloropropene (HFCO-1233zd). The term HFCO-1233zd herein encompasses both the *cis-* and *trans-* forms of 1,1,1-trifluo-3,chloropropene, including various mixtures thereof. The terms "cisHFCO-1233zd" and "transHFCO-1233zd" are used herein to describe the cis- and trans-forms of 1,1,1-trifluo,3-chlororopropene, respectively. In certain embodiments, transHFCO-1233zd is predominantly (at least 90 percent by weight, based on the total weight of HFCO-1233zd) or exclusively used.

In some implementations, the hydrofluoroolefin consists essentially of, or, in some cases, consists of, a HCFO, such as transHFCO-1233zd. As used herein, "consists essentially of", when used with reference to the content of HCFO, such as transHFCO-1233zd, means that the HCFO is present in an amount of at least 90% by weight, such as at least 95% by weight, or at least 99% by weight, based on the total weight of hydrofluoroolefin in the composition.

In certain embodiments, the hydrofluoroolefin is present in an amount of 1 to 6% by weight, such as 3 to 6% by weight, or 4.5 to 5.5% by weight, based on the total weight of the isocyanate-reactive composition.

Moreover, in the isocyanate-reactive compositions of this specification, the hydroflouroolefin and water are present in the isocyanate-reactive composition in a relative ratio, by weight, of 3:1 to 6:1, such as 3:1 to 5: 1 or 3:1 to less than 4.0:1.

As will be appreciated, other blowing agents, such as carbon dioxide, hydrocarbons, such as n-pentane, cyclopentane, and isopentane, and/or polyfluoroalkanes, could be used if desired. In some implementations, however, the isocyanate-reactive compositions of this specification are substantially, or, in some cases, completely free of such other blowing agent. As used herein, "substantially free", when used with reference to the absence of a blowing agent in the isocyanate-reactive composition, means that such other blowing agent is present, if at all, in an amount of no more than 5% by weight or, in some cases, no more than 1% by weight, based on the total weight of the blowing agent composition.

In certain embodiments, the amount of blowing agent used in the isocyanate-reactive composition is such that the resulting foam has a density, as determined by ASTM D1622-14, of at least 44 kg/m³, at least 48 kg/m³, or at least 51 kg/m³, and no more than 160 kg/m³, such as no more than 80 kg/m³, or no more than 60 kg/m³.

Other ingredients can be included in the isocyanate-reactive composition used in the polyurethane foam-forming compositions of the present invention. In certain embodiments, the isocyanate-reactive composition comprises a flame retardant. Suitable flame retardants include, but are not limited to, brominated flame retardants, such as a brominated polyol and (ii) a phosphonated flame retardants, such as a halogenated, such as chlorinated, phosphates, includes mixtures thereof.

In addition, in some embodiments, the isocyanate-reactive composition further comprises a surfactant to, for example, stabilize the foaming reaction mixture until it obtains rigidity. Such surfactants often comprise a liquid or solid organosilicon compound, a polyethylene glycol ether of a long chain alcohol, a tertiary amine, an alkanolamine salt of a long chain alkyl acid sulfate ester, an alkylsulfonic ester, or an alkylarylsulfonic acid, or a mixture thereof. Often, 0.5 to 10 parts by weight of the surfactant per 100 parts of the isocyanate-reactive composition is used.

As indicated earlier, the isocyanate-reactive composition also comprises a tertiary amine catalyst composition. More specifically, the tertiary amine catalyst composition comprises an imidazole. As used herein, "imidazole" refers generally to imidazole itself and to derivatives of imidazole. For example, in some implementations, the imidazole has the general structure: 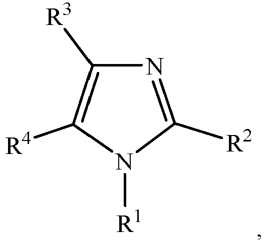 in which R¹ represents a hydrogen atom, an optionally substituted aryl group, or a C₁-C₆ alkyl group, such as a methyl group (CH₃), R² represents a hydrogen atom, a C₁-C₆ alkyl group, such as a methyl group (CH₃), or a nitro group, R³ represents a hydrogen atom, a C₁-C₆ alkyl group that optionally includes a carboxy group or an amino group, a carboxaldehyde group, a nitro group, a 2-amino-3-hydroxypropyl group, or a group of the structure -CH₂-CH(NH₂)- COOH, and R⁴ represents a hydrogen atom, a carboxaldehyde group or a carboxyl group. For example, in some implementations, R¹ and R² each represent a methyl group (CH³) and R³ and R⁴ each represent a hydrogen atom.

If desired, one or more other catalysts may also be included in the isocyanate-reactive composition, such as other tertiary amine compounds. Examples of other suitable tertiary amine catalysts include, without limitation, triethylenediamine, N-methylmorpholine, pentamethyl diethylenetriamine, dimethylcyclohexylamine, tetra-methylethylenediamine, 1-methyl-4-dimethylaminoethyl-piperazine, 3-methoxy-N-dimethyl-propylamine, N-ethylmorpholine, diethylethanol-amine, N-cocomorpholine, N,N-dimethyl-N',N'-dimethylisopropyl-propylene diamine, N,N-diethyl-3-diethyl aminopropylamine and dimethyl-benzyl amine.

As indicated earlier, however, in the isocyanate-reactive compositions of this specification, the imidazole is present in an amount of at least 70% by weight, based on the total weight of tertiary amine that is present in the tertiary amine catalyst composition. In some implementation, imidazole is present in an amount of at least 80% by weight, at least 90% by weight, at least 95% by weight, at least 99% by weight, or 100% by weight, based on the total weight of tertiary amine present in the tertiary amine catalyst composition. Further, in some implementation, imidazole is present in an amount of 0.1 to 5 % by weight, such as 1 to 5% by weight, 1 to 2% by weight, or 1 to 1.5% by weight, based on total weight of polyol present in the isocyanate-reactive composition.

In some implementations, the isocyanate-reactive composition comprises other catalyst, besides a tertiary amine catalyst. Suitable such catalysts include, for example, organometallic compounds. Examples of suitable organometallic catalysts include, without limitation, organomercury, organolead, organobismuth, organozinc, organoferric and organotin catalysts. Suitable organotin catalysts include, without limitation, tin salts of carboxylic acids such as dibutyltin di-2-ethyl hexanoate, dibutyltin dilaurate, and dibutyltin diisooctylmaleate. A catalyst for the trimerization of polyisocyanates, such as an alkali metal alkoxide or carboxylate may also optionally be employed herein. Such catalysts are used in an amount which measurably increases the rate of reaction of the polyisocyanate. In some implementations, organometallic catalyst is present in an amount of 0.1 to 1% by weight, 0.1 to 0.5% by weight, or, in some cases, 0.1 to 0.3% by weight, based on total weight of polyol present in the isocyanate-reactive composition.

Other suitable ingredients, if desired, include reaction retarders, cell regulators, emulsifiers, foam stabilizers, colorants, such as pigments and dyes, and fillers, such as, but not limited to, barium sulfate and calcium carbonate.

As indicated earlier, the polyurethane-foam forming composition described herein can be particularly suitable for use in SPF applications. As a result, certain embodiments of the present invention are directed to methods for producing a polyurethane foam. In some embodiments, these methods comprise: (a) impingement mixing an isocyanate-reactive composition as described above with a polyisocyanate in a spray gun to provide a mixture thereof; and (b) spraying the mixture onto a surface. In certain embodiments, the resulting foam is a rigid foam which can be particularly suitable for use as insulating foam in architectural (wall and roofing), automotive, appliance, and other applications. As such, in certain embodiments, the substrate used in the methods of the present invention is embodied as a building component, such as a wall, floor, or ceiling.

The isocyanate-reactive composition of this specification, it was discovered, can produce foams of consistent quality even if the isocyanate-reactive composition is stored for several months prior to production of the foam, as assessed by consistency in foam density. As a result, in some implementations, the isocyanate-reactive compositions of this specification are stored for at least 3 months, at least 4 months, or, in some cases, at least 6 month prior to impingement mixing the isocyanate-reactive composition with a polyisocyanate in a spray gun and spraying the resulting mixture onto a surface. In some embodiments, the density of a foam produced after storing the isocyanate-reactive composition for such time periods prior to impingement mixing the isocyanate-reactive composition with a polyisocyanate in a spray gun and spraying the resulting mixture onto a surface, as determined by ASTM D1622-14, is within 10%, or, in some cases, within 5%, of the density of a foam produced by an identical process, but produced immediately after making the isocyanate-reactive composition.

In certain embodiments of the methods of the present invention, the polyisocyanate and isocyanate-reactive composition are combined in a relative volume ratio of 1.5:1 to 1:1.5, such as 1.1:1 to 1:1.1. In certain embodiments of the methods of the present invention, the polyisocyanate and isocyanate-reactive composition are combined in relative amounts such that the NCO Index (ratio of isocyanate groups to isocyanate-reactive groups multiplied by 100) is 70 to 150, 90 to 150, 90 to 135, 100 to 135 or 100 to 120.

Certain embodiments of the present invention are also directed to the resulting foams having, for example, a density as described above. In certain embodiments, the resulting foams are closed cell foams, which, as used herein, means that the foam has a closed cell content of at least 80% by volume, such as at least 85% by volume, or at least 90% by volume, measured according to ISO 4590:2002.

In certain embodiments, the polyurethane-foam forming compositions described herein form a foam having a Class A rating (flame spread index of no more than 25 and smoke development index of no more than 450), determined according to the ASTM E 84 test. In some implementations, the foam can be particularly advantageous in the production of foam wall structures. Such foam wall structures may comprise: (a) a frame comprising: a first member; a second member spaced apart from the first member; and connecting members extending between the first member and the second member, wherein the first member, the second member, and the connecting members each comprise a front surface and a rear surface that form a front frame surface and a rear frame surface; (b) a panel disposed over the front frame surface; and (c) a foam layer disposed in between the first member, the second member, and connecting members and optionally adhered to a rear surface of the panel, wherein the foam layer comprises polyurethane foam having a density of at least 2.8 lb/ft³ (44.9 kg/m³), in some cases at least 3.0 lb/ft³ (44.9 kg/m³), when measured according to ASTM D1622-14, and comprises a reaction product of a polyurethane foam-forming composition as described in this specification. In some implementations, the panel directly overlies the front frame surface and, as a result, the foam layer adheres directly to the panel, while, in other embodiments, the foam layer may adhere to a component, such as a metal sheet or metal mesh, that may be disposed between a front surface of the foam layer front surface and the panel. Wall structures for which use of foam layers as described herein may be particularly advantageous include those described in U.S. Patent Nos. 8,925,270 B2, 9,938,711 B2, 9,562,359 B1, 10,415,244 B2, 10,167,630 B2, 10,370,849 B2, 11,377,850 B2 , 11,519,172 B2, 11,718,989 B2, 11,642,687 B2, 11,214,958 B1, 11,225,790 B1, 11,414,862 B2, 11,214,958 B1, 11,225,790 B1, and RE49,073 E.

Various aspects of the subject matter described herein are set out in the following numbered clauses:
Clause 1. An isocyanate-reactive composition comprising: (a) an aromatic polyester polyol having a functionality of 2.6 to 3.5 and an OH number of 300 to 400 mg KOH/g, which is present in an amount of at least 70% by weight, based on total weight of the isocyanate-reactive composition; (b) a tertiary amine catalyst composition comprising at least 70% by weight, based on the total weight of tertiary amine, of an imidazole; and (c) a blowing agent composition comprising: (1) water; and (2) a hydrofluoroolefin, wherein the hydrofluoroolefin is present in an amount of 1 to 6% by weight, based on total weight of the isocyanate-reactive composition, and the hydrofluoroolefin and water are present in the isocyanate-reactive composition in a relative ratio, by weight, of 3:1 to 6:1.
Clause 2. The isocyanate-reactive composition of clause 1, wherein the aromatic polyester polyol having a functionality of 2.6 to 3.5 and an OH number of 300 to 400 mg KOH/g has a functionality of 2.7 to 3.5, 2.7 to 3.2, or 2.8 to 3.2 and/or an OH number of 300 to 380 mg KOH/g or 360 to 380 mg KOH/g.
Clause 3. The isocyanate-reactive composition of clause 1 or clause 2, wherein the polyester polyol having a functionality of 2.6 to 3.5 and an OH number of 300 to 400 mg KOH/g is present in an amount of 70 to 90% by weight, 70 to 80% by weight, or 75 to 80% by weight, based on the total weight of the isocyanate-reactive composition.
Clause 4. The isocyanate-reactive composition of clause 1 or clause 2, wherein the polyester polyol having a functionality of 2.6 to 3.5 and an OH number of 300 to 400 mg KOH/g is an esterification reaction product of a reaction mixture comprising polyol, such as glycol and a higher functionality polyols, and a terephthalate source.
Clause 5. The isocyanate-reactive composition of clause 4, wherein the polyol has a molecular mass of 62 g/mol to 400 g/mol.
Clause 6. The isocyanate-reactive composition of clause 4 or clause 5, wherein the polyol comprises 1,4-dihydroxycyclohexane, 1,2-propanediol, 1,3-propanediol, 2-methyl-1,3-propanediol, 1,5-pentanediol, 1,6-hexanediol, 1,8-octanediol, neopentyl glycol, ethylene glycol, diethylene glycol, triethylene glycol, tetraethylene glycol, dipropylene glycol, tripropylene glycol, dibutylene glycol, tripropylene glycol, glycerol, sorbitol, pentaerythritol, trimethylolpropane, a natural vegetable oil, a modified natural vegetable oil, a fatty acid derivative of vegetable oil, or a mixture of any two or more thereof.
Clause 7. The isocyanate-reactive composition of one of clause 4 to clause 6, wherein the terephthalate source comprises polyethylene terephthalate (PET), industrial recycled PET, post-consumer PET, terephthalic acid (TA), industrial recycled TA (BACA), or a mixture of any two or more thereof.
Clause 8. The isocyanate-reactive composition of one of clause 4 to clause 7, wherein the reaction mixture comprises 45 to 70% by weight of a glycol, 20 to 35% by weight a terephthalate source, and 5 to 20% by weight glycerin, based on the total weight of the reaction mixture used to produce the aromatic polyester polyol.
Clause 9. The isocyanate-reactive composition of one of clause 1 to clause 9, wherein the isocyanate-reactive composition is substantially or completely free of polyether polyols, such as sucrose-based polyol.
Clause 10. The isocyanate-reactive composition of one of clause 1 to clause 9, wherein the isocyanate-reactive composition comprises a compound, such as a monomeric compound, having at least 2, 2 to 8, or 2 to 4, isocyanate-reactive hydrogen atoms, and a molecular weight of from 32 to 399, such as ethanolamine, diethanolamine, triethanolamine, sorbitol, glycerol, or a mixture of any two or more thereof.
Clause 11. The isocyanate-reactive composition of clause 10, wherein the compound having at least 2 isocyanate-reactive hydrogen atoms and a molecular weight of from 32 to 399 is present in an amount of 1 to 10% by weight, 1 to 5% by weight, or 2 to 3% by weight, based on the total weight of isocyanate-reactive components in the isocyanate-reactive composition.
Clause 12. The isocyanate-reactive composition of one of clause 1 to clause 11, wherein the water is present in an amount of 0.5 to 2% by weight, 0.8 to 1.5% by weight, or 1 to 1.5% by weight, based on the total weight of the isocyanate-reactive composition.
Clause 13. The isocyanate-reactive composition of one of clause 1 to clause 12, wherein the hydrofluoroolefin consists essentially of, or, in some cases, consists of, a HCFO, such as transHFCO-1233zd.
Clause 14. The isocyanate-reactive composition of one of clause 1 to clause 13, wherein the hydrofluoroolefin is present in an amount of 3 to 6% by weight or 4.5 to 5.5% by weight, based on the total weight of the isocyanate-reactive composition.
Clause 15. The isocyanate-reactive composition of one of clause 1 to clause 14, wherein the hydroflouroolefin and water are present in the isocyanate-reactive composition in a relative ratio, by weight, of 3:1 to 5:1 or 3:1 to less than 4.0:1.
Clause 16. The isocyanate-reactive composition of one of clause 1 to clause 15, wherein the isocyanate-reactive compositions is substantially or completely free of other physical blowing agents.
Clause 17. The isocyanate-reactive composition of one of clause 1 to clause 16, wherein the imidazole has the general structure: 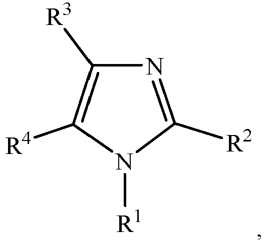 in which R¹ represents a hydrogen atom, an optionally substituted aryl group, or a C₁-C₆ alkyl group, such as a methyl group (CH₃), R² represents a hydrogen atom, a C₁-C₆ alkyl group, such as a methyl group (CH₃), or a nitro group, R³ represents a hydrogen atom, a C₁-C₆ alkyl group that optionally includes a carboxy group or an amino group, a carboxaldehyde group, a nitro group, a 2-amino-3-hydroxypropyl group, or a group of the structure -CH₂-CH(NH₂)- COOH, and R⁴ represents a hydrogen atom, a carboxaldehyde group or a carboxyl group.
Clause 18. The isocyanate-reactive composition of clause 17, wherein R¹ and R² each represent a methyl group (CH³) and R³ and R⁴ each represent a hydrogen atom.
Clause 19. The isocyanate-reactive composition of one of clause 1 to clause 18, wherein the imidazole is present in an amount of at least 80% by weight, at least 90% by weight, at least 95% by weight, at least 99% by weight, or 100% by weight, based on the total weight of tertiary amine present in the tertiary amine catalyst composition.
Clause 20. The isocyanate-reactive composition of one of clause 1 to clause 19, wherein the imidazole is present in an amount of 0.1 to 5% by weight, 1 to 5% by weight, 1 to 2% by weight, or 1 to 1.5% by weight, based on total weight of polyol present in the isocyanate-reactive composition.
Clause 21. The isocyanate-reactive composition of one of clause 1 to clause 20, further comprising an organometallic catalyst that is present in an amount of 0.1 to 1% by weight, 0.1 to 0.5% by weight, or 0.1 to 0.3% by weight, based on total weight of polyol present in the isocyanate-reactive composition.
Clause 22. A method for producing a polyurethane foam comprising: (a) impingement mixing the isocyanate-reactive composition of one of clause 1 to clause 21 in a spray gun to provide a mixture thereof; and (b) spraying the mixture onto a surface, such as where the surface is embodied as a building component, such as a wall, floor, or ceiling.
Clause 23. The method of clause 22, wherein the polyisocyanate comprises a methylene-bridged polyphenyl polyisocyanate and/or a prepolymer of a methylene-bridged polyphenyl polyisocyanate having an average functionality of 2.0 to 3.5 or 2.1 to 3.1, isocyanate moieties per molecule, and a free NCO content of 15 to 35% by weight, 20 to 35% by weight, 25 to 35% by weight or 28 to 34% by weight, such as where the methylene-bridged polyphenyl polyisocyanate and/or a prepolymer of a methylene-bridged polyphenyl polyisocyanate is present in an amount of at least 50% by weight, at least 80% by weight, at least 90% by weight, or at least 99% by weight, based on the total weight of polyisocyanate.
Clause 24. The method of clause 22 or clause 23, wherein the isocyanate-reactive composition is stored for at least 3 months, at least 4 months, or at least 6 month prior to impingement mixing the isocyanate-reactive composition with a polyisocyanate in a spray gun and spraying the resulting mixture onto a surface, such as where the density of a foam produced after storing the isocyanate-reactive composition, as determined by ASTM D1622-14, is within 10% ,or within 5%, of the density of a foam produced by an identical process, but produced immediately after making the isocyanate-reactive composition.
Clause 25. The method of one of clause 22 to clause 24, wherein the polyisocyanate and isocyanate-reactive composition are combined in a relative volume ratio of 1.5:1 to 1:1.5 or 1.1:1 to 1:1.1.
Clause 26. The method of one of clause 22 to clause 25, wherein the polyisocyanate and isocyanate-reactive composition are combined in relative amounts to provide a NCO Index (ratio of isocyanate groups to isocyanate-reactive groups multiplied by 100) of 70 to 150, 90 to 150, 90 to 135, 100 to 135 or 100 to 120.
Clause 27. A polyurethane foam produced by the method of one of clause 22 to clause 26, such as where the polyurethane foam has a closed cell content of at least 80% by volume, at least 85% by volume, or at least 90% by volume, measured according to ISO 4590:2002, and/or the polyurethane foam has a density, as determined by ASTM D1622-14, of at least 44 kg/m³, at least 48 kg/m³, or at least 51 kg/m³, and no more than 160 kg/m³, such as no more than 80 kg/m³, or no more than 60 kg/m³, and/or the polyurethane foam has a Class A rating (flame spread index of no more than 25 and smoke development index of no more than 450), determined according to the ASTM E 84 test.
Clause 28. A foam wall structure comprising: (a) a frame comprising: a first member; a second member spaced apart from the first member; and connecting members extending between the first member and the second member, wherein the first member, the second member, and the connecting members each comprise a front surface and a rear surface that form a front frame surface and a rear frame surface; (b) a panel disposed over the front frame surface; and (c) a foam layer disposed in between the first member, the second member, and connecting members and optionally adhered to a rear surface of the panel, wherein the foam layer comprises polyurethane foam having a density of at least 2.8 lb/ft³ (44.9 kg/m³) or at least 3.0 lb/ft³ (44.9 kg/m³), when measured according to ASTM D1622-14, and comprises a reaction product of a polyisocyanate and the isocyanate-reactive composition of one of clause 1 to clause 21.

The following Examples are given as being illustrative of the present invention. All parts and percentages given in these Examples are parts by weight and percentages by weight, unless otherwise indicated.

### EXAMPLES

### Examples 1-3

Polyol blends were prepared using the ingredients and amounts (parts by weight) listed in Table 1 below in which:
TEOA refers to Triethanolamine 99%, commercially available from Dow;
POLYOL 1 is a phthalic anhydride based polyester polyol having a hydroxyl number of 311 mg KOH/gram polyol and a functionality of 2.7, commercially available as Isoexter^{®} TB-306 from Coim;
POLYOL 2 is an aromatic polyester polyol having a hydroxyl number of 360-380 mg KOH/gram polyol and a functionality of 3.0, commercially available as Terol^{®} 649 from Huntsman;
EB is ethylene glycol monobutyl ether solvent;
FR 1 is tris (1-chloro-2-propyl) phosphate) flame retardant;
FR 2 is a reactive, high-bromine-content diol mixture flame retardant, commercially available as SAYTEX^{®} RB-7980 from Albemarle;
CATALYST 1 is 1,2-dimethylimidazole, commercially available as DABCO^{®} 2041 from Evonik);
CATALYST 2 is dibutyltin diisooctylmaleate, commercially available as DABCO^{®} T125 from Evonik;
SURFACTANT 1 is a silicone surfactant, commercially available as VORASURF^{™} DC 193 from Dow;
CATALYST 3 is N,N,N',N",N"-pentamethyl-dipropylenetriamine, commercially available as Jeffcat^{®} ZR-40 from Huntsman;
CATALYST 4 is N,N-bis(3-dimethylaminopropyl)- N-isopropanolamine, commercially available as Jeffcat^{®} ZR-50 from Huntsman;
CATALYST 5 is a tertiary amine catalyst believed to be N,N"-diisopropyl-N,N',N"-trimethyldiethylenetriamine;
HCFO is trans-1,1,1-trifluoro-3-chloropropene, commercially available from Honeywell International Inc., as Solstice^{®} LBA; and
HFO is *cis*-1,1,1,4,4,4-hexafluoro-2-butene, commercially available as Opteon^{™} 1100 from The Chemours Company FC, LLC.

**Table 1**

| Chemicals | Example | | |
|---|---|---|---|
| | 1 | 2 | 3 |
| TEOA | 1.88 | 1.97 | 2.01 |
| POLYOL 1 | 0.00 | 77.79 | 0.00 |
| POLYOL 2 | 73.38 | 0.00 | 78.84 |
| EB | 3.77 | 3.95 | 4.03 |
| FR 1 | 7.54 | 7.91 | 8.06 |
| FR 2 | 2.83 | 2.97 | 3.02 |
| CATALYST 1 | 0.38 | 0.40 | 1.07 |
| CATALYST 2 | 0.19 | 0.20 | 0.20 |
| Water (distilled) | 1.18 | 1.24 | 1.26 |
| SURFACTANT 1 | 1.41 | 1.48 | 1.51 |
| CATALYST 3 | 0.38 | 0.00 | 0.00 |
| CATALYST 4 | 1.41 | 0.00 | 0.00 |
| CATALYST 5 | 0.00 | 2.10 | 0.00 |
| HCFO | 0.00 | 4.88 | 4.97 |
| HFO | 5.65 | 0.00 | 0.00 |

To prepare the polyol blends, all components were added to a suitable container and mixed at about room temperature.

After aging at ambient conditions of around 65-75F] for the periods of time set forth in Table 2, the polyol blends were spray applied to an oriented strand board (OSB) substrate framed with 2x4 dimensional lumber wall studs using a Graco HVR machine with 60 feet of heated hose using a Graco Fusion CP spray gun equipped with a 0101 mix chamber, using a mix ratio of 1:1 by volume with Mondur^{®} MR (a polymeric diphenylmethane diisocyanate (pMDI) having a NCO content of at least 31.0%, a viscosity of 150 to 250 mPa·s @ 25°C; and an average equivalent weight of 132, commercially available from Covestro LLC. The following parameters were used in the spray operation: Temperature of resin and isocyanate: 85°F; Temperature of polyol blend and isocyanate in machine: 125°F; Temperature of machine hose: 125°F; Set pressures of polyol blend and isocyanate in machine: 1500 psi.

Results are set forth in Table 2. Foam density was evaluated according to ASTM D1622-14. % Density Change is the percentage change in density relative to the density of the foam produced from the same formulation at 0 months aging. Reactivity was evaluated according to string gel time and is reported in seconds. As is apparent, foams produced from formulation Example 3 after each of 1, 2, 3, 4, 5 and 6 months aging had a density that is within 10% of the density of a foam produced from formulation Example 3 after 0 months aging. This was not the case for foams produced from formulation Examples 1 and 2.

**Table 2**

| Aging Period | Formulation Example | Density | % Density Change | Reactivity |
|---|---|---|---|---|
| 0 | 1 | 2.56 | -- | 3 |
| | 2 | 2.83 | -- | 3 |
| | 3 | 2.74 | -- | 4.4 |
| 1 month | 1 | 2.41 | -6.22 | 3 |
| | 2 | 2.91 | 2.78 | 3 |
| | 3 | 2.67 | -2.62 | 4.4 |
| 2 months | 1 | 2.84 | 9.86 | 3 |
| | 2 | 2.92 | 3.18 | 3 |
| | 3 | 2.80 | 2.14 | 5.5 |
| 3 months | 1 | 3.14 | 18.47 | 3 |
| | 2 | 2.96 | 4.52 | 3.5 |
| | 3 | 2.84 | 3.52 | 5 |
| 4 months | 1 | 3.08 | 16.88 | 3 |
| | 2 | 3.17 | 10.84 | 4 |
| | 3 | 2.79 | 1.79 | 5 |
| 5 months | 1 | 3.10 | 17.42 | 3 |
| | 2 | 3.20 | 11.65 | 5 |
| | 3 | 2.86 | 4.20 | 5 |
| 6 months | 1 | 3.12 | 17.95 | 3 |
| | 2 | 3.20 | 11.65 | 5.5 |
| | 3 | 2.88 | 4.86 | 5 |

This specification has been written with reference to various non-limiting and non-exhaustive embodiments. However, it will be recognized by persons having ordinary skill in the art that various substitutions, modifications, or combinations of any of the disclosed embodiments (or portions thereof) may be made within the scope of this specification. Thus, it is contemplated and understood that this specification supports additional embodiments not expressly set forth herein. Such embodiments may be obtained, for example, by combining, modifying, or reorganizing any of the disclosed steps, components, elements, features, aspects, characteristics, limitations, and the like, of the various non-limiting embodiments described in this specification. In this manner, Applicant reserves the right to amend the claims during prosecution to add features as variously described in this specification, and such amendments comply with the requirements of 35 U.S.C. § 112, first paragraph, and 35 U.S.C. § 132(a).

## Claims

1. An isocyanate-reactive composition comprising:
(a) an aromatic polyester polyol having a functionality of 2.6 to 3.5 and an OH number of 300 to 400 mg KOH/g, which is present in an amount of at least 70% by weight, based on total weight of the isocyanate-reactive composition;
(b) a tertiary amine catalyst composition comprising at least 70% by weight, based on the total weight of tertiary amine, of an imidazole; and
(c) a blowing agent composition comprising:
(1) water; and
(2) a hydrofluoroolefin, wherein
the hydrofluoroolefin is present in an amount of 1 to 6% by weight, based on total weight of the isocyanate-reactive composition, and
the hydrofluoroolefin and water are present in the isocyanate-reactive composition in a relative ratio, by weight, of 3:1 to 6:1.

2. The isocyanate-reactive composition of claim 1, wherein the aromatic polyester polyol has a functionality of 2.7 to 3.2 and an OH number of 300 to 380 mg KOH/g.

3. The isocyanate-reactive composition of claim 1 or claim 2, wherein the aromatic polyester polyol is an esterification reaction product of a reaction mixture comprising a polyol and a terephthalate source comprising polyethylene terephthalate.

4. The isocyanate-reactive composition of one of claim 1 to claim 3, wherein the isocyanate-reactive composition comprises a monomeric compound having 2 to 4 isocyanate-reactive hydrogen atoms and a molecular weight of from 32 to 399 that is present in an amount of 1 to 5% by weight, based on total weight of isocyanate-reactive components in the isocyanate-reactive composition.

5. The isocyanate-reactive composition of one of claim 1 to claim 4, wherein water is present in an amount of 0.8 to 1.5% by weight, based on total weight of the isocyanate-reactive composition.

6. The isocyanate-reactive composition of one of claim 1 to claim 5, wherein the hydrofluoroolefin consists essentially of 1,1,1-trifluoro-3-chloropropene.

7. The isocyanate-reactive composition of claim 6, wherein the 1,1,1-trifluoro-3-chloropropene is present in an amount of 3 to 6% by weight, based on total weight of the isocyanate-reactive composition.

8. The isocyanate-reactive composition of one of claim 1 to claim 7, wherein the hydrofluoroolefin and water are present in the isocyanate-reactive composition in a relative ratio, by weight, of 3:1 to less than 4.0:1.

9. The isocyanate-reactive composition of one of claim 1 to claim 8, wherein the imidazole has the general structure: 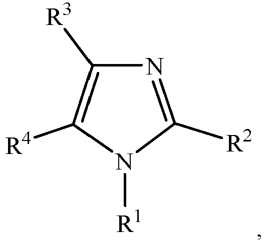 in which R¹ represents a hydrogen atom, an optionally substituted aryl group, or a C₁-C₆ alkyl group, such as a methyl group (CH₃), R² represents a hydrogen atom, a C₁-C₆ alkyl group, such as a methyl group (CH₃), or a nitro group, R³ represents a hydrogen atom, a C₁-C₆ alkyl group that optionally includes a carboxy group or an amino group, a carboxaldehyde group, a nitro group, a 2-amino-3-hydroxypropyl group, or a group of the structure -CH₂-CH(NH₂)- COOH, and R⁴ represents a hydrogen atom, a carboxaldehyde group or a carboxyl group.

10. The isocyanate-reactive composition of claim 9, wherein R¹ and R² each represent a methyl group and R³ and R⁴ each represent a hydrogen atom.

11. The isocyanate-reactive composition of one of claim 1 to claim 10, wherein the imidazole is present in an amount of at least 80% by weight or at least 95% by weight, based on total weight of tertiary amine present in the tertiary amine catalyst composition.

12. A polyurethane foam-forming composition comprising the isocyanate-reactive composition of one of claim 1 to claim 10 and a polyisocyanate, wherein the polyisocyanate is present in an amount sufficient to provide the polyurethane foam-forming composition with an isocyanate index of 70 to 150.

13. A method for producing a polyurethane foam, comprising:
(a) impingement mixing the isocyanate-reactive composition of one of claim 1 to claim 11 with a polyisocyanate in a spray gun to provide a mixture thereof; and
(b) spraying the mixture onto a surface.

14. The method of claim 13, wherein the isocyanate-reactive composition is prepared and stored for at least 3 months prior to step (a).

15. A polyurethane foam produced by the method of claim 13 or claim 14, wherein the polyurethane foam has a density, as determined by ASTM D1622-14, of 44 to 60 kg/m³.
